# FASCICULE DE BREVET EUROPEEN

(11) **EP 1 004 497 B1**
(45) Date de publication et mention de la délivrance du brevet: **20.08.2003**
(21) Numéro de dépôt: 99402601.1
(22) Date de dépôt: 21.10.1999
(51) Int. Cl.: B62D 25/10, B60R 21/34

(54) **Carrosserie avant de véhicule assurant la protection des piétons en cas de choc frontal**
Vordere Fahrzeugkarosserie zur Sicherstellung der Fussgängersicherheit bei einem Frontalaufprall
Vehicle front body providing pedestrian protection in case of frontal collision

(30) Priorité: 26.11.1998 FR 9814898
(43) Date de publication de la demande: 31.05.2000
(73) Titulaire: AUTOMOBILES PEUGEOT, 75116 Paris (FR); AUTOMOBILES CITROEN, 92200 Neuilly-sur-Seine (FR)
(72) Inventeur: Gumery, Xavier, 78220 Viroflay (FR)
(74) Mandataire: Seytre, Françoise

(56) Documents cités:
- EP-A- 0 926 018
- DE-A- 2 922 893
- GB-A- 2 056 923
- FRANÇOISE BRUN: "Vers des voitures moins dangereuses pour les piétons" INGENIEURS DE L'AUTOMOBILE., no. 3, mars 1979 (1979-03), pages 204-208, XP002099218 BOULOGNE FR

## Description

L'invention se rapporte à un véhicule comportant une carrosserie avant comprenant un capot assurant la protection des piétons en cas de choc frontal.

En cas de choc frontal d'un véhicule avec un piéton, la tête du piéton vient, en général, heurter violemment le capot. Lors de l'impact de la tête du piéton sur le capot, il se produit un enfoncement du capot jusqu'à un impact éventuel avec des éléments rigides situés sous le capot tels que la batterie, des éléments porteurs... De même, il peut se produire un impact direct avec des zones rigides du capot. Ces impacts contre les éléments rigides constituent la cause principale des décès ou des blessures graves des piétons renversés.

Il est connu du document DE-A-29 22 893 un véhicule comportant une structure et une carrosserie avant comprenant un capot assurant la protection des piétons en cas de choc frontal, le capot du véhicule étant constitué des éléments latéraux sur lequel est fixé rigidement une feuille, les éléments latéraux du capot étant constitués chacune d'un profilé ayant une section transverse sensiblement en forme de U et conformées de façon à se déformer par écrasement lors d'un choc avec un piéton, les ailes avant du véhicule étant conformées de façon à se déformer par écrasement, en cas de choc du piéton au niveau de la jonction entre le capot et les ailes.>

Le document XP-002099218 "Vers des voitures moins dangereuses pour les piétons" (Ingénieur de l'automobile 1979.3) décrit quant à lui un véhicule dont le capot est sans raidisseur, sauf à sa périphérie.

Cependant, les dispositifs de protection décrits dans ces documents réduisent de manière insatisfaisante la gravité des lésions des piétons dans certains cas d'impacts avec le véhicule.

Un but de la présente invention est de proposer un véhicule assurant une meilleure protection des piétons en cas de choc frontal.

Ce but est atteint par la combinasion des caratéristiques de la revendication 1.

Selon une autre particularité l'ouverture du U formé par chaque profilé est orientée vers le bas, c'est-à-dire vers la structure du véhicule.

Selon une autre particularité les deux flancs de chaque profilé en U sont légèrement évasés.

Selon une autre particularité la feuille extérieure est pliée et est soudée sur le pourtour du cadre, de façon à recouvrir ce dernier.

Selon une autre particularité la feuille extérieure est soudée sur le flanc extérieur de chaque profilé.

Selon une autre particularité l'un au moins des flancs des profilés en U comporte une pluralité de découpes ou ouvertures.

Selon une autre particularité les découpes ou ouvertures sont oblongues et sensiblement parallèles à l'axe longitudinal du profilé.

Selon une autre particularité les ailes avant du véhicule sont conformées de façon à se déformer par pliage et/ou écrasement et/ou rupture, notamment en cas de choc du piéton au niveau de la jonction entre le capot et les ailes.

Selon une autre particularité les doublures d'ailes comportent au moins une amorce de pliage facilitant leur déformation par écrasement.

Selon une autre particularité la ou les portions de la structure du véhicule sur lesquelles reposent le capot comportent au moins une amorce de pliage facilitant leur déformation par écrasement.

D'autres caractéristiques et avantages de l'invention apparaîtront à la lecture de la description détaillée qui va suivre, pour la compréhension de laquelle on se reportera aux dessins annexés, dans lesquels :
- la figure 1 représente schématiquement, en une vue de dessus, un capot de véhicule selon l'invention,
- la figure 2 représente une vue en coupe selon la ligne CC de la figure 1,
- la figure 3 représente une vue en perspective d'un détail du cadre du capot de la figure 1,
- la figuré 4 représente une vue en coupe transversale, schématique et partielle, de l'avant d'un véhicule selon l'invention, illustrant la zone de jonction entre le capot et l'aile avant du véhicule,
- la figure 5 représente une vue en coupe longitudinale, schématique et partielle, de l'avant d'un véhicule selon l'invention, illustrant la zone de jonction entre le capot et la base du pare-brise du véhicule.

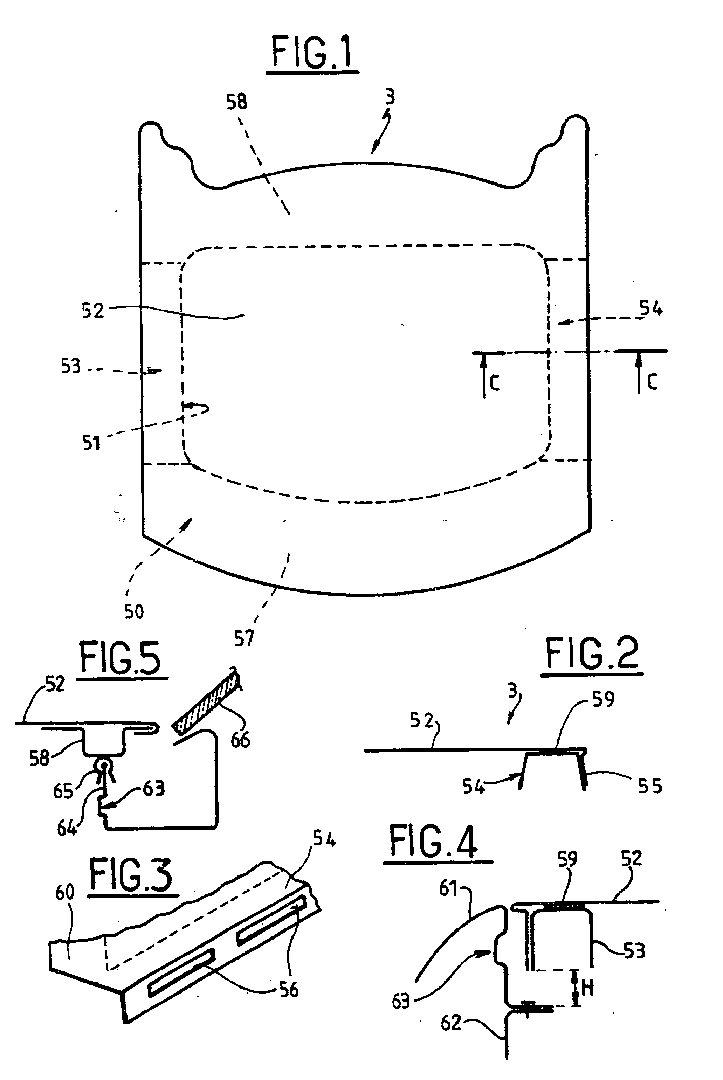

L'invention va à présent être décrite en référence aux figures 1 à 5.

La figure 1 illustre un exemple de réalisation d'un capot 3 de véhicule selon l'invention. Le capot 3 est constitué d'un cadre 50 en tôle qui est ouvert dans sa partie centrale 51 et sur lequel est soudée une feuille de tôle 52. C'est-à-dire que le cadre 50 constitue la doublure du capot 3, tandis que la feuille 52 forme l'enveloppe extérieure de ce dernier. La structure des parties avant 57 et arrière 58 et des parties latérales 53, 54 du cadre 50 est déterminée de façon que ces dernières se déforment lorsqu'un piéton tombe sur le capot 3, pour absorber une grande partie de l'énergie résultant du choc.

Les deux portions latérales 53, 54 sont par exemple constituées chacune d'un profilé ayant une section transverse sensiblement en forme de U, l'ouverture du U étant orientée de préférence vers le bas, c'est-à-dire vers la structure du véhicule. Les profilés 53, 54 sont par exemple soudées aux parties avant 57 et arrière 58 du cadre 50. Comme représenté à la figure 3, chaque profilé 54 peut être constitué d'une feuille de tôle pliée en U et dont les extrémités 60 sont planes pour permettre leur soudage sur, respectivement, les paries avant 57 et arrière 58 du cadre 50. Ces parties avant 57 et arrière 58 du cadre 50 peuvent également être constituées de profilés en U, l'ouverture du U étant orientée de préférence vers le haut, mais peut également être orientée vers le bas.

La feuille 52 extérieure est pliée sur le pourtour du cadre 50 de façon à recouvrir ce dernier. La feuille 52 est soudée sur ce même pourtour du cadre 50. En particulier, dans les parties latérales du capot 3, la feuille 52 est de préférence soudée sur le flanc extérieur 55 de chaque profilé 53, 54 (figure 2). Un mastic 59 peut être disposé entre la base du U formé par le profilé et la feuille 52 de tôle (figure 2).

Par ailleurs, l'un ou les deux flancs de chaque profilé 53, 54 en U peuvent comporter une pluralité d'ouvertures 56 prévues pour faciliter leur déformation lors d'un choc avec un piéton (figure 3). Ces ouvertures 56, de préférence oblongues et sensiblement parallèles à l'axe longitudinal du profilé 53, 54, ne pénalisent pas la rigidité d'ensemble du profilé, c'est-à-dire en flexion, mais facilite l'écrasement du profilé sous le poids d'un piéton tombant sur le capot. Les points de soudure de la feuille extérieure 52 sur les profilés 53, 54 peuvent donc être situés entre deux ouvertures 56 successives.

Ainsi, lorsqu'un piéton et notamment sa tête tombe sur les parties latérales du capot 3, les profilés 53, 54 s'écrasent. C'est-à-dire que les deux flancs parallèles du U s'écartent pour permettre l'aplatissement du profilé 53, 54. Avantageusement, les deux flancs des profilés en U peuvent être légèrement évasés pour faciliter cet écrasement.

Avantageusement, la structure de chaque aile avant 61 du véhicule peut être conformée également de façon à pouvoir se déformer, pour éviter au piéton des blessures graves, notamment lorsque ce dernier heurte le véhicule au niveau de la jonction entre le capot 3 et l'aile avant 61. Par exemple, la doublure d'aile peut comporter au moins une amorce de pliage 63 facilitant la déformation de l'aile 61, par écrasement sur la structure 62, lors du choc avec le piéton (figure 4).

En outre, la distance H entre le capot 3 et la structure 62 de véhicule située sous le capot 3 est déterminée pour permettre une déformation suffisante du capot 3 lors du choc Cette distance H entre le capot 3 et la structure 62 est de l'ordre de quelques dizaines de millimètres, et de préférence de l'ordre de 50 mm.

De la même manière, les parties avant 57 et arrière 58 du cadre 50 peuvent être conçues et dimensionnées pour pouvoir s'enfoncer et s'écraser lors d'un choc avec un piéton. C'est-à-dire que l'on ménage, sur la structure du véhicule, à l'avant et à l'arrière du capot 3, des espaces ou des pièces susceptibles de s'écraser facilement, permettant au capot 3 de s'enfoncer lors d'un choc avec un piéton.

La figure 5 représente un exemple d'agencement de l'arrière du capot 3 selon l'invention. L'arrière du capot, qui est constitué d'un profilé 58 en U sur lequel est soudée la feuille extérieure 52, repose sur la structure du véhicule, par exemple sur une paroi 64 de l'auvent à la base du pare-brise 66. De manière classique, un joint 65 est interposé entre le capot 3 et la structure sur laquelle repose le capot 3.

Comme précédemment, la paroi 64 sur laquelle repose le capot peut comporter au moins une amorce 63 de pliage facilitant sa déformation par écrasement lors du choc avec le piéton.

En cas d'impact au centre du capot 3, la structure décrite ci-dessus, qui est souple, permet un enfoncement important qui absorbe une grande partie de l'énergie du choc. De préférence, la feuille de tôle 52 recouvrant le cadre 50 a une faible épaisseur, c'est-à-dire de l'ordre de 0,6 mm.

Ainsi, la conception de la carrosserie du véhicule selon l'invention permet de réduire significativement la gravité des blessures des piétons, notamment lorsque le capot 3 est relevée consécutivement au choc avec le piéton.

Bien que l'invention ait été décrite en liaison avec des modes de réalisation particuliers, elle comprend tous les équivalents techniques des moyens décrits qui entrent dans le cadre de la définition donnée par la revendication principale.

## Revendications

1. Véhicule comportant une structure et une carrosserie avant comprenant un capot assurant la protection des piétons en cas de choc frontal, le capot (3) du véhicule étant constitué d'un cadre (50) en tôle ouvert dans sa partie centrale (51) et sur lequel est soudé une feuille de tôle (52), les parties du cadre (50) constituant l'avant (57), l'arrière (58) et les parties latérales (53, 54) du capot (3) étant constituées chacune d'un profilé ayant une section transverse sensiblement en forme de U de façon à se déformer par écrasement et/ou rupture lors d'un choc avec un piéton, et la distance (H) entre les parties latérales du capot (3) et la structure (62) de véhicule située sous le capot (3) étant de l'ordre de quelques dizaine de millimètres, et de préférence de l'ordre de 50 mm, les portions de la structure du véhicule sur lesquelles reposent le capot (3) étant conformées de façon à se déformer par pliage et/ou écrasement et/ou rupture lorsqu'un piéton tombe sur ces dernières.

2. Véhicule selon la revendication 1 **caractérisé en ce que** l'ouverture du U formé par chaque profilé (53, 54) est orientée vers le bas, c'est-à-dire vers la structure du véhicule.

3. Véhicule selon l'une quelconque des revendications 1 et 2 **caractérisé en ce que** les deux flancs de chaque profilé (53, 54) en U sont légèrement évasés.

4. Véhicule selon l'une quelconque des revendications 1 à 3 **caractérisé en ce que** la feuille (52) extérieure est pliée et est soudée sur le pourtour du cadre (50), de façon à recouvrir ce dernier.

5. Véhicule selon la revendication 3, **caractérisé en ce que** la feuille (52) extérieure est soudée sur le flanc extérieur (55) de chaque profilé (53, 54).

6. Véhicule selon l'une quelconque des revendications 1 a 2 ou 5, **caractérisé en ce que** l'un au moins des flancs des profilés (53, 54) en U comporte une pluralité de découpes ou ouvertures (56).

7. Véhicule selon la revendication 6, **caractérisé en ce que** les découpes ou ouvertures (56) sont oblongues et sensiblement parallèles à l'axe longitudinal du profilé (53, 54).

8. Véhicule selon l'une quelconque des revendications 1 à 7 **caractérisé en ce que** les ailes avant (61) du véhicule sont conformées de façon à se déformer par pliage et/ou écrasement et/ou rupture, notamment en cas de choc du piéton au niveau de la jonction entre le capot (3) et les ailes (61).

9. Véhicule selon la revendication 8 **caractérisé en ce que** les doublures d'ailes (61) comportent au moins une amorce de pliage (63) facilitant leur déformation par écrasement.

10. Véhicule selon l'une quelconque des revendications 1 à 9 **caractérisé en ce que** la ou les portions de la structure du véhicule sur lesquelles reposent le capot (3) comportent au moins une amorce (63) de pliage facilitant leur déformation par écrasement.

## Patentansprüche

1. Fahrzeug mit einem Aufbau und einer vorderen Karosserie mit einer Motorhaube, die für den Schutz von Fußgängern bei einem Frontalaufprall sorgt, wobei die Motorhaube (3) des Fahrzeugs aus einem Rahmen (50) aus Blech gebildet ist, der in seinem mittleren Abschnitt (51) offen ist und an den eine Blechtafel (52) geschweißt ist, wobei die Abschnitte des Rahmens (50), die den vorderen Teil (57), den hinteren Teil (58) und die Seitenteile (53, 54) der Motorhaube (3) bilden, aus jeweils einem Profil mit im Wesentlichen U-förmigem Querschnitt gebildet sind, sodass sie sich durch Stauchung und/oder Bruch bei einem Zusammenstoß mit einem Fußgänger verformen, und wobei der Abstand (H) zwischen den Seitenteilen der Motorhaube (3) und dem unter der Motorhaube (3) gelegenen Aufbau (62) in der Größenordnung von einigen zig Millimetern und vorzugsweise in der Größenordnung von 50 mm beträgt, wobei die Abschnitte des Aufbaus des Fahrzeugs, auf denen die Motorhaube (3) ruht, so ausgebildet sind, dass sie sich durch Biegen und/oder Stauchen und/oder Bruch verformen, wenn ein Fußgänger darauf fällt.

2. Fahrzeug nach Anspruch 1, **dadurch gekennzeichnet, dass** die Öffnung des von jedem Profil (53, 54) gebildeten U nach unten zeigt, das heißt zum Aufbau des Fahrzeugs hin.

3. Fahrzeug nach Anspruch 1 oder 2, **dadurch gekennzeichnet, dass** die beiden Seiten jedes U-Profils (53, 54) leicht aufgeweitet sind.

4. Fahrzeug nach einem der Ansprüche 1 bis 3, **dadurch gekennzeichnet, dass** die äußere Tafel (52) umgebogen und am Umfang des Rahmens (50) so angeschweißt ist, dass sie diesen bedeckt.

5. Fahrzeug nach Anspruch 3, **dadurch gekennzeichnet, dass** die äußere Tafel (52) an die Außenflanke (55) jedes Profils (53, 54) geschweißt ist.

6. Fahrzeug nach einem der Ansprüche 1, 2 oder 5, **dadurch gekennzeichnet, dass** mindestens eine der Flanken der U-Profile (53, 54) mehrere Ausschnitte oder Öffnungen (56) aufweist.

7. Fahrzeug nach Anspruch 6, **dadurch gekennzeichnet, dass** die Ausschnitte oder Öffnungen (56) länglich und im Wesentlichen zur Längsachse des Profils (53, 54) parallel sind.

8. Fahrzeug nach einem der Ansprüche 1 bis 7, **dadurch gekennzeichnet, dass** die vorderen Kotflügel (61) des Fahrzeugs so ausgebildet sind, dass sie sich durch Biegen und/oder Stauchen und/oder Bruch verformen, insbesondere im Falle eines Zusammenpralls mit einem Fußgänger an der Verbindung zwischen Motorhaube (3) und Kotflügeln (61).

9. Fahrzeug nach Anspruch 8, **dadurch gekennzeichnet, dass** die Verkleidung der Kotflügel (61) mindestens einen Ausgangspunkt für Biegung (63) aufweist, der ihre Verformung durch Stauchen erleichtert.

10. Fahrzeug nach einem der Ansprüche 1 bis 9, **dadurch gekennzeichnet, dass** der oder die Abschnitte des Aufbaus des Fahrzeugs, auf denen die Motorhaube (3) ruht, mindestens einen Ausgangspunkt für Biegung (63) aufweisen, der ihre Verformung durch Stauchen erleichtert.

## Claims

1. Vehicle comprising a structure and front bodywork including a bonnet ensuring protection for pedestrians in the event of front impact, the bonnet (3) of the vehicle being constituted by a frame (50) made of sheet metal open in its central portion (51) and to which is welded a metal sheet (52), the parts of the frame (50) constituting the front (57), the back (58) and the side parts (53, 54) of the bonnet (3) each being constituted by a section having a substantially U-shaped cross section so as to be deformed by crushing and/or breakage at the time of an impact with a pedestrian, and the distance (H) between the side parts of the bonnet (3) and the vehicle structure (62) located under the bonnet (3) being of the order of a few tens of millimetres, and preferably of the order of 50 mm, the portions of the structure of the vehicle on which the bonnet (3) rests being shaped so as to be deformed by folding and/or crushing and/or breakage when a pedestrian falls on the latter.

2. Vehicle according to Claim 1 **characterised in that** the opening of the U formed by each section (53, 54) is directed downwards, i.e. towards the structure of the vehicle.

3. Vehicle according to any one of Claims 1 and 2 **characterised in that** the two sides of each U-shaped section (53, 54) are slightly flared.

4. Vehicle according to any one of Claims 1 to 3 **characterised in that** the outer sheet (52) is folded and is welded to the periphery of the frame (50), in order to cover the latter.

5. Vehicle according to Claim 3, **characterised in that** the outer sheet (52) is welded to the outer side (55) of each section (53, 54).

6. Vehicle according to any one of Claims 1 to 2 or 5, **characterised in that** at least one of the sides of the U-shaped sections (53, 54) comprises a plurality of cut-outs or openings (56).

7. Vehicle according to Claim 6, **characterised in that** the cut-outs or openings (56) are oblong and substantially parallel to the longitudinal axis of the section (53, 54).

8. Vehicle according to any one of Claims 1 to 7 **characterised in that** the front wings (61) of the vehicle are shaped so as to be deformed by folding and/or crushing and/or breakage, particularly in the event of impact from the pedestrian at the junction between the bonnet (3) and the wings (61).

9. Vehicle according to Claim 8 **characterised in that** the wing linings (61) comprise at least one preliminary fold (63) facilitating their deformation by crushing.

10. Vehicle according to any one of Claims 1 to 9 **characterised in that** the portion(s) of the structure of the vehicle on which the bonnet (3) rests comprise at least one preliminary fold (63) facilitating their deformation by crushing.
